(19) Europäisches Patentamt / European Patent Office / Office européen des brevets

(11) **EP 3 669 153 B1**

(12) **EUROPÄISCHE PATENTSCHRIFT**

(45) Veröffentlichungstag und Bekanntmachung des Hinweises auf die Patenterteilung:
**23.04.2025   Patentblatt 2025/17**

(21) Anmeldenummer: **18759272.0**

(22) Anmeldetag: **15.08.2018**

(51) Internationale Patentklassifikation (IPC):
**G01L 9/00** (2006.01)

(52) Gemeinsame Patentklassifikation (CPC):
**G01L 9/0044; G01L 9/0072; G01L 13/025**

(86) Internationale Anmeldenummer:
**PCT/EP2018/072084**

(87) Internationale Veröffentlichungsnummer:
**WO 2019/034674 (21.02.2019 Gazette 2019/08)**

(54) **SENSOR**

SENSOR

CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.08.2017   DE 102017007717**

(43) Veröffentlichungstag der Anmeldung:
**24.06.2020   Patentblatt 2020/26**

(73) Patentinhaber: **Marquardt GmbH**
**78604 Rietheim-Weilheim (DE)**

(72) Erfinder:
• **WEINÖHL, Markus**
**78573 Wurmlingen (DE)**

• **WEISSER, Dietmar**
**78532 Tuttlingen (DE)**

(74) Vertreter: **Staeger & Sperling**
**Partnerschaftsgesellschaft mbB**
**Sonnenstraße 19**
**80331 München (DE)**

(56) Entgegenhaltungen:
EP-A1- 2 876 421          EP-B1- 2 876 421
WO-A1-01/42776           WO-A2-03/106952
DE-A1- 102005 008 959   DE-A1- 102009 051 176
DE-A1- 4 233 323         US-A1- 2006 081 052

**Beschreibung**

Die Erfindung betrifft eine Messvorrichtung nach dem Oberbegriff des Patentanspruchs 1.

Bei der Messvorrichtung kann es sich um einen Sensor, wie einen Drucksensor, einen Relativdrucksensor, einen Differenzdrucksensor, einen Wegsensor o. dgl., handeln. Solche Messvorrichtungen dienen vor allem zur Messung einer Messgröße eines Fluides.

Beispielsweise kann die Messvorrichtung zur Wasserstandsmessung in Waschmaschinen, Geschirrspülern, Nass- und/oder Trockensaugern oder in sonstigen Hausgeräten verwendet werden. Insbesondere handelt es sich bei diesen Messvorrichtungen um Drucksensoren für niedrige Drücke.

Es sind derartige Messvorrichtungen mit einem Gehäuse und mit einer im und/oder am Gehäuse angeordneten elastischen Membran bekannt. Mit der Membran wirkt ein Signalgeber zusammen, derart dass die Einwirkung des Fluides auf die Membran ein zur Messgröße korrespondierendes Messsignal am Signalgeber bewirkt. Bei der bekannten Messvorrichtung wird ein Magnet als Signalgeber verwendet, der wiederum zur Erzeugung des Messsignals mit einem Hallsensor zusammenwirkt. Bei dem Magneten sowie dem Hallsensor handelt es sich um kostenintensive Bestandteile, so dass die Messvorrichtung in kostensensitiven Bereichen nicht einsetzbar ist. Außerdem hat es sich herausgestellt, dass äußere Einflüsse auf die Messvorrichtung sich störend auf den Signalgeber auswirken können, was wiederum zu einer Verfälschung des Messsignals führen kann.

Messvorrichtungen und insbesondere Aspekte von Druckmessvorrichtungen sind im Stand der Technik beispielsweise aus den Dokumenten WO 01/42776 A1, EP 2 876 421 A1, DE 10 2009 051176 A1 und insbesondere DE 10 2005 008959 A1 bekannt.

Der Erfindung liegt die Aufgabe zugrunde, die Messvorrichtung im Hinblick auf deren Kostengünstigkeit weiterzuentwickeln. Insbesondere soll des Weiteren ein stabiles Messsystem geschaffen werden, welches möglichst unabhängig von äußeren Einflüssen arbeitet und bei dem die Qualität des Messsignals verbessert ist.

Diese Aufgabe wird bei einer gattungsgemäßen Druckmessvorrichtung durch die kennzeichnenden Merkmale des Anspruchs 1 gelöst.

Bei der erfindungsgemäßen Messvorrichtung umfasst die Membran eine elektrisch leitfähige, elastomere Schicht, wobei die Einwirkung des Fluides auf die Membran eine Änderung der elektrischen Kapazität der Membran bewirkt. Des Weiteren ist der Signalgeber von der Membran gebildet. Und zwar ist insbesondere die Membran als Signalgeber betreibbar, indem die Kapazitätsänderung der Membran bei Einwirkung des Fluides als Messsignal vorgesehen ist. Mit anderen Worten ist der Signalgeber in die Membran integriert, so dass ein Magnet sowie ein Hallsensor nicht benötigt werden.

Aufgrund der Einsparung von Bauteilen ist somit eine kostengünstige Messvorrichtung geschaffen.

Weitere Ausgestaltungen der Erfindung sind Gegenstand der Unteransprüche.

Erfindungsgemäß umfasst die Membran eine erste und eine zweite elektrisch leitfähige Schicht.

Weiter sind die beiden leitfähigen Schichten durch eine elektrische Isolationsschicht getrennt.

Zudem sind die erste elektrisch leitfähige Schicht sowie die zweite elektrisch leitfähige Schicht als Elektroden auf der elektrischen Isolationsschicht ausgebildet. In einfacher Art und Weise sind die Elektroden einander gegenüberliegend auf der jeweiligen Oberfläche der Isolationsschicht angeordnet. Die Elektroden bilden mit der dazwischen befindlichen Isolationsschicht einen elektrischen Kondensator. Dadurch ist eine besonders einfache Auswertung der Kapazitätsänderung für die Erzeugung des Messsignals gegeben. Darüber hinaus ist eine überproportionale Änderung der Kapazität bei veränderter Fluideinwirkung auf die Membran gegeben, womit eine besondere Feinfühligkeit des Messsignals festzustellen ist.

Zwecks Beaufschlagung der Elektroden mit einer elektrischen Spannung kann die Elektrode mit einem elektrischen Anschluss elektrisch verbunden sein. In einfacher Art und Weise kann der elektrische Anschluss aus einer auf die Oberfläche der Isolationsschicht aufgebrachten elektrisch leitfähigen Schicht bestehen. Der funktionssicheren sowie einfachen Kontaktierbarkeit halber kann der elektrische Anschluss wiederum von der Peripherie der Isolationsschicht zur Elektrode führend angeordnet sein.

Eine einfache Geometrie für die Anordnung kann dadurch erzielt werden, indem die Isolationsschicht im Wesentlichen kreisförmig ausgestaltet ist. Die Elektrode kann wiederum im Wesentlichen kreisförmig mit einem bezüglich der Isolationsschicht kleineren Durchmesser ausgestaltet sein. Zweckmäßigerweise kann dann die Elektrode im Wesentlichen konzentrisch bezüglich der Peripherie der Isolationsschicht angeordnet sein. Selbstverständlich kann jedoch auch eine andere Geometrie gewählt werden. Beispielsweise können die Elektroden und/oder die Isolationsschicht auch rechteckförmig, ellipsenförmig, rautenförmig o. dgl. ausgestaltet sein.

In funktionssicherer sowie kostengünstiger Art und Weise kann die Isolationsschicht aus einem Elastomer bestehen. Bei dem Elastomer kann es sich um Silikon, und zwar insbesondere um eine Silikonfolie, handeln. Die Isolationsschicht kann eine Dicke im Bereich von in etwa 0,05 mm bis 0,2 mm aufweisen. In bevorzugter Weise besitzt die Isolationsschicht eine Dicke von ca. 0,1 mm.

Ebenfalls in funktionssicherer sowie kostengünstiger Art und Weise kann die elektrische leitfähige Schicht aus einem mit elektrisch leitfähigen Partikeln versehenen Elastomer bestehen. Das Elastomer kann aus Silikon sowie die elektrisch leitfähigen Partikel können aus Graphit bestehen. In diesem Fall bestehen die Isolationsschicht sowie die elektrisch leitfähige Schicht im Wesentlichen aus den gleichen Materialien, so dass eine weitgehend spannungsfreie Verformung der Isolationsschicht und der elektrisch leitfähigen Schicht bei Einwirkung des Fluides erfolgt. Damit wird vorteilhafterweise dem Auftreten von Rissen und/oder Ablösungen in der Isolationsschicht sowie der elektrisch leitfähigen Schicht entgegen gewirkt. Die elektrisch leitfähige Schicht kann als Elektrode auf die Oberfläche der Isolationsschicht aufgedruckt, auflaminiert o. dgl. sein, womit deren einfache Herstellbarkeit gegeben ist. Die Dicke der elektrisch leitfähigen Schicht kann in bevorzugter Weise maximal 0, 1 mm betragen. Insbesondere kann die Dicke der elektrisch leitfähigen Schicht im Bereich von in etwa 1 nm bis 0,1 mm liegen.

Zwecks einfacher Montage kann die Membran an einem Träger vorgespannt befestigt sein. Der einfachen Herstellbarkeit halber kann die Befestigung mittels Verkleben, Verschweißen, Heißverstemmen o. dgl. erfolgen. Es kann sich dabei anbieten, die Membran an der

Peripherie der Isolationsschicht am Träger zu befestigen. Soweit das Gehäuse zumindest teilweise in etwa zylinderförmig ausgestaltet ist, kann es sich weiterhin anbieten, dass der Träger als ein Trägerring ausgestaltet ist. In zweckmäßiger Art und Weise kann der Träger in einer Druckkammer im Gehäuse angeordnet sein.

Um einer Verfälschung des Messsignals aufgrund äußerer Einflüsse weiter entgegen zu wirken, kann eine weitere elektrisch leitfähige, elastomere Schicht vorgesehen sein, die als Referenz für das Messsignal an der Membran dient. Zweckmäßigerweise kann die weitere elektrisch leitfähige, elastomere Schicht in der Druckkammer angeordnet sein. Des Weiteren kann in einfacher Art und Weise die weitere elastomere Schicht an der der Membran gegenüberliegenden Seite des Trägers befestigt sein.

Zwecks einfacher Zuführung des Fluides kann am Gehäuse ein Anschlussstutzen für die Zuführung des Fluides in die Druckkammer angeordnet sein. Um einen ungehinderten Zugang zur Membran für das Fluid sicherzustellen, kann eine mit dem Anschlussstutzen korrespondierende Öffnung in der weiteren elastomeren Schicht befindlich sein.

Für eine besonders bevorzugte Ausgestaltung der erfindungsgemäßen Messvorrichtung ist nachfolgendes festzustellen.

Drucksensoren werden in diversen Endgeräten zur Druckmessung verwendet. Dieser Druck kann absolut, relativ, und zwar in der Regel zum Umgebungsdruck, oder differenziell, indem es sich um Druckunterschiede zwischen zwei verschiedenen Drücken handelt, gemessen werden. Dieser Messwert wird in der Regel an eine übergeordnete Steuer- und/oder Regelelektronik weitergeleitet, die das Signal interpretiert und weiter verarbeitet. Als Beispiel für ein solches Endgerät kann eine Waschmaschine dienen, bei der der Wasserstand meist als Relativdruck zur Umgebung gemessen wird. Hierzu wird unten am Wasserbehälter der Druck des Wassers gemessen. In diesem Beispiel wird das Drucksignal dazu verwendet, den Wasserstand zu überwachen und die Waschparameter entsprechend einzustellen.

Die Grundaufgabe besteht darin, den zu messenden Druck in ein elektrisches Messsignal zu wandeln. Dabei nehmen jedoch diverse Umgebungsbedingungen negativen Einfluss auf den Sensor. Beispielsweise kann es sich bei diesen Umgebungsbedingungen um Schwingungen, Feuchtigkeit, Temperatur, diverse Verschmutzungen o. dgl. handeln. Zudem benötigen die Kunden immer genauere, aber gleichzeitig auch kostengünstigere Produkte. Daher besteht hier die Herausforderung einen kostengünstigen, unempfindlichen aber dennoch genauen Drucksensor zu entwickeln.

Bisherige Lösungen basieren auf dem Hall Effekt oder auf induktiven Systemen, welche prinzipbedingt mehrere Bauteile zur Messung benötigen. Beispielsweise sind auf der Druckseite hierfür ein beweglicher Magnet und auf der Elektronikseite ein Hallelement mit einer Ausgabeelektronik notwendig. Die erfindungsgemäße Lösung sieht vor, die benötigten Bauteile auf ein absolutes Minimum zu reduzieren und das Sensorelement als eine kapazitive Struktur direkt in die zur Druckabdichtung benötigte Membran zu integrieren. Die Membran wird mit Hilfe eines Trägers vorgespannt und kann optional mit einer Referenzmembran abgeglichen werden. Diese Art der kapazitiven Messung ist bewährt und kostengünstig.

Geschaffen ist somit ein Drucksensor mit kapazitiver Messtechnologie, die zur Druckmessung direkt auf eine Membran strukturiert ist, wobei es sich bei der Membran um ein Elastomer mit kapazitiven Strukturen handelt.

Die mit der Erfindung erzielten Vorteile bestehen insbesondere darin, dass die erfindungsgemäße Messvorrichtung besonders kostengünstig ist. Damit kann die Messvorrichtung bei kostensensitiven Geräten eingesetzt werden. Insbesondere können damit Anwendungen erschlossen werden, die mit der aktuellen Technik nicht erreichbar sind. Des Weiteren ist die Messvorrichtung einfacher und/oder besser im Messbereich zu skalieren. Dadurch ist eine einfache Anpassung der Messvorrichtung im Hinblick auf die Kosten, die Genauigkeit o. dgl. ermöglicht.

Ein Ausführungsbeispiel der Erfindung mit verschiedenen Weiterbildungen und Ausgestaltungen ist in den Zeichnungen dargestellt und wird im Folgenden näher beschrieben. Es zeigen

Fig. 1    einen Drucksensor mit einer Membran in Explosiv-Darstellung,

Fig. 2    einen Schnitt durch die Membran aus Fig. 1 in einer ersten Ausführung,

Fig. 3    einen Schnitt durch die Membran aus Fig. 1 in einer zweiten Ausführung,

Fig. 4 die Draufsicht auf die Elektroden umfassende Membran aus Fig. 1 in einer Detail-Darstellung,

Fig. 5 die Anordnung der Elektroden aus Fig. 4 und

Fig. 6 eine Prinzip-Darstellung der Einwirkung eines Fluides auf die Membran entsprechend einem Schnitt wie in Fig. 2.

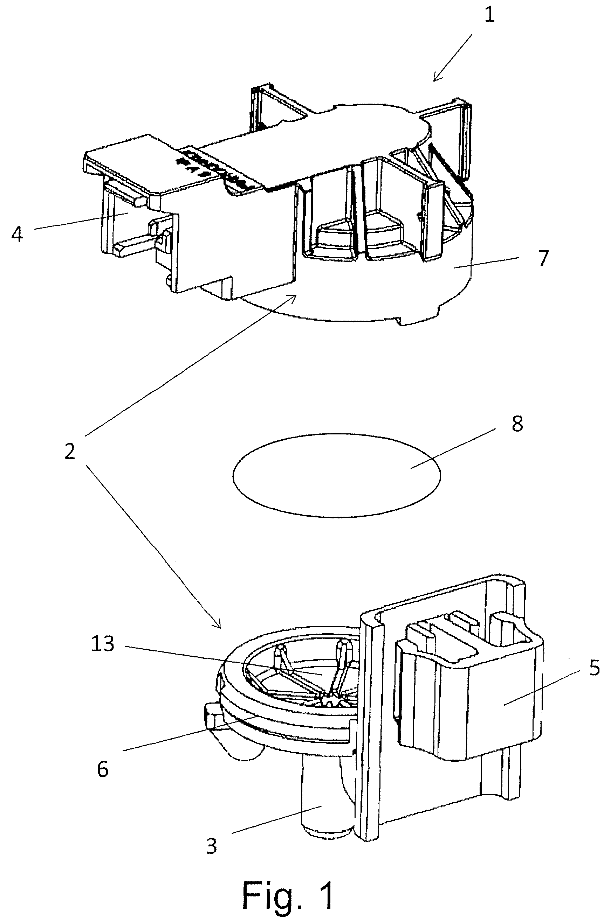

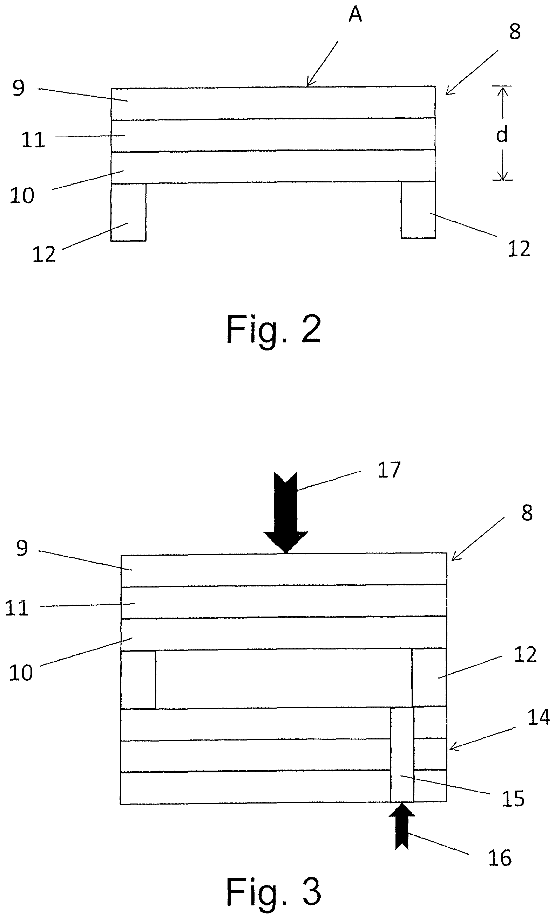

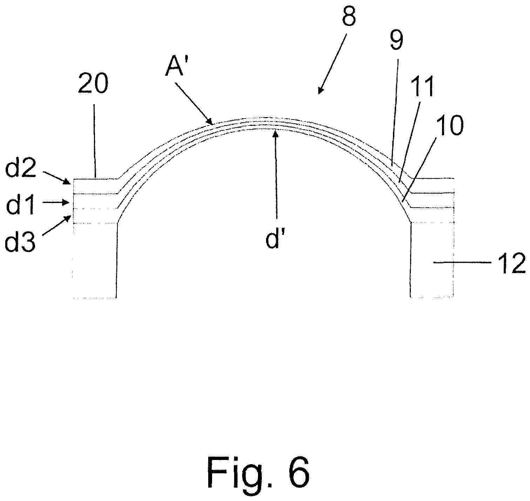

In Fig. 1 ist ein Drucksensor zu sehen, der als Messvorrichtung 1 zur Messung einer Messgröße eines Fluides, und zwar vorliegend des Drucks einer Flüssigkeit in einem Hausgerät, dient. Der Drucksensor 1 besitzt ein Gehäuse 2, an dem ein Anschlussstutzen 3 für die Zuführung der zu messenden Flüssigkeit angeordnet ist, sowie einen Steckanschluss 4 zum Anschluss der elektrischen Zuleitungen. Mittels einer am Gehäuse 2 befindlichen Verrastung 5 ist der Drucksensor 1 im Hausgerät montierbar. Das Gehäuse 2 schließlich umfasst einen Sockel 6 sowie einen Deckel 7. Im und/oder am Gehäuse 2 ist eine elastische Membran 8 angeordnet, auf die die Flüssigkeit über den Anschlussstutzen 3 einwirkt. Entsprechend dem in der Flüssigkeit herrschenden Druck wird die Membran 8 durchgebogen, wie in einer Prinzip-Darstellung in Fig. 6 gezeigt ist. Die Membran 8 umfasst eine elektrisch leitfähige, elastomere Schicht 9 (siehe Fig. 2), so dass die Einwirkung des Fluides auf die Membran 8 aufgrund deren Durchbiegung eine Änderung der elektrischen Kapazität der Membran 8 bewirkt. Die Membran 8 ist damit als ein Signalgeber betreibbar, indem die elektrische Kapazitätsänderung der Membran 8 bei Einwirkung des Fluides als Messsignal dient, womit der Signalgeber von der Membran 8 gebildet ist. Somit ist vorliegend der mit der Membran 8 zusammenwirkende Signalgeber, wobei die Einwirkung des Fluides auf die Membran 8 ein zur Messgröße korrespondierendes Messsignal am Signalgeber bewirkt, als ein einziges, integriertes Bauteil realisiert.

Wie in Fig. 2 zu sehen ist, umfasst in weiterer Ausgestaltung die Membran 8 eine erste elektrisch leitfähige Schicht 9 und eine zweite elektrisch leitfähige Schicht 10. Die beiden leitfähigen Schichten 9, 10 sind durch eine elektrische Isolationsschicht 11 voneinander getrennt. Wird die Membran 8 mit einer elektrischen Spannung beaufschlagt, so wirken die beiden Schichten 9, 10, die aufgrund der Isolationsschicht 11 voneinander beabstandet sind, als ein Kondensator. Die Kapazität dieses mittels der Schichten 9, 10 gebildeten Kondensators beträgt

$$C = K \cdot (A / d)$$

wobei C die Kapazität, A die Oberfläche der Membran 8, d die Dicke der Membran 8 und K eine Konstante darstellen. In die Konstante gehen dabei die elektrische Feldkonstante des Vakuums $\varepsilon_0$ und die relative Permittivität $\varepsilon_r$ des von der Isolationsschicht 11 gebildeten Dielektrikums ein. Wie anhand der Fig. 6 zu sehen ist, erfolgt aufgrund der Durchbiegung der Membran 8 bei Druckeinwirkung eine Vergrößerung der Oberfläche A' gegenüber der ursprünglichen Oberfläche A und damit einhergehend eine Verringerung der Dicke d' in Bezug auf die Summe der Einzeldicken d1+d2+d3 der Membran 8. Folglich vergrößert sich die Kapazität C durch die Druckeinwirkung überproportional. Wie bereits erwähnt korrespondiert die jeweils vorliegende Kapazität beziehungsweise Kapazitätsänderung zum jeweiligen Druck des Fluides. Die Kapazitätsbestimmung sowie die Druckermittlung können mittels einer nicht weiter gezeigten Elektronik, die beispielsweise im Gehäuse 2 angeordnet ist, vorgenommen werden.

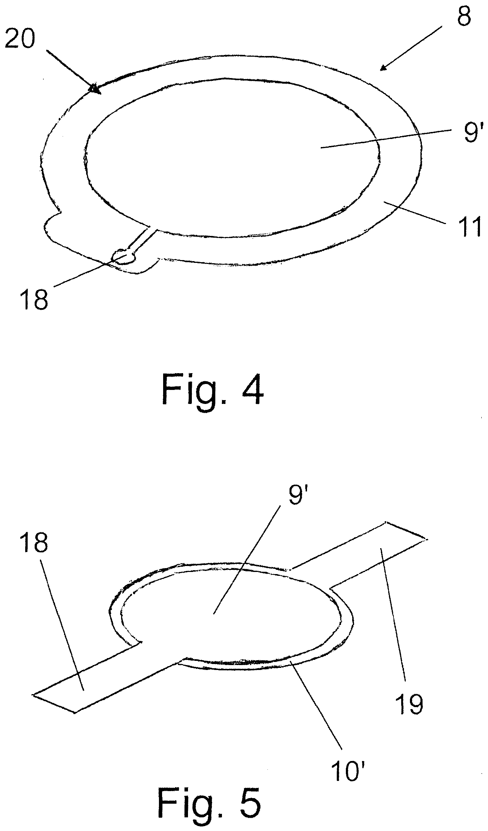

Zweckmäßigerweise sind die erste elektrisch leitfähige Schicht 9 sowie die zweite elektrisch leitfähige Schicht 10 als Elektroden 9', 10' auf der elektrischen Isolationsschicht 11 strukturiert ausgebildet. In Fig. 4 ist in einer Draufsicht auf die Membran 8 die auf der Oberseite der Isolationsschicht 11 befindliche Elektrode 9' zu sehen. Die nicht sichtbare, weitere Elektrode 10' befindet sich auf der Unterseite der Isolationsschicht 11. Die Elektroden 9', 10' sind gemäß Fig. 5, in der die Isolationsschicht 11 weggelassen ist, einander gegenüberliegend auf der jeweiligen Oberfläche der Isolationsschicht 11 angeordnet. Die Elektroden 9', 10' mit der dazwischen befindlichen Isolationsschicht 11 bilden dann den bereits beschriebenen elektrischen Kondensator.

Wie in Fig. 4 zu sehen ist, ist die Elektrode 9' mit einem elektrischen Anschluss 18 elektrisch verbunden. Der elektrische Anschluss 18 ist von der Peripherie 20 der Isolationsschicht 11 zur Elektrode 9' führend angeordnet und dient zum Anlegen der elektrischen Spannung an die Elektrode 9'. Ein ebensolcher, von der Peripherie 20 der Isolationsschicht 11 abgehender elektrischer Anschluss 19 stellt die elektrische Verbindung zur Elektrode 10' her, wie man anhand der Fig. 5 erkennt. Der elektrische Anschluss 18, 19 besteht aus einer auf die jeweilige Oberfläche der Isolationsschicht 11 aufgebrachten elektrisch leitfähigen Schicht. Anhand der zwischen den elektrischen Anschlüssen 18, 19 anliegenden elektrischen Spannung lasst sich dann der Wert der aufgrund der Einwirkung des Fluides auf die Membran 8 hervorgerufenen elektrischen Kapazität C des von der Membran 8 gebildeten Kondensators ermitteln.

In einer bevorzugten Ausbildung ist die Isolationsschicht 11 im Wesentlichen kreisförmig ausgestaltet, wie gemäß Fig. 4 und Fig. 5 zu sehen ist. Die Elektrode 9', 10' ist ebenfalls im Wesentlichen kreisförmig gestaltet. Jedoch besitzt die Elektrode 9', 10' einen in Bezug auf die Isolationsschicht 11 kleineren Durchmesser. Weiter ist die Elektrode 9', 10' im Wesentlichen konzentrisch bezüglich der Peripherie 20 der Isolationsschicht 11 angeordnet. Die Isolationsschicht 11 besteht aus einem Elastomer. Als besonders geeignetes Elastomer hat sich Silikon erwiesen. Insbesondere handelt es sich bei der Isolationsschicht 11 um eine Silikonfolie. Die Isolationsschicht 11 weist eine Dicke dl (siehe Fig. 6) im Bereich von in etwa 0,05 bis 0,2 Millimeter auf. Bevorzugt ist eine Dicke dl von ca. 0,1 Millimeter für die Isolationsschicht 11. Die elektrische leitfähige Schicht 9, 10 besteht aus einem mit elektrisch leitfähigen Partikeln versehenen Elastomer. Hierbei haben sich Silikon als Elastomer sowie Graphit als elektrisch leitfähige Partikel als besonders geeignet erwiesen. Die elektrisch leitfähige Schicht 9, 10 kann als Elektrode 9', 10' auf die Oberfläche der Isolationsschicht 11 aufgedruckt, auflaminiert o. dgl. werden. Die Dicke d2, d3 der elektrisch leitfähigen Schicht 9, 10 (siehe Fig. 6) liegt im Bereich von in etwa 1 Nanometer bis 0,1 Millimeter. Es hat sich dabei herausgestellt, dass die Dicke d2, d3 bevorzugterweise maximal 0,1 mm betragen sollte.

Zwecks einfacher Anordnung der elastischen Membran 8 im Gehäuse 2 ist die Membran 8 an einem Träger 12 vorgespannt befestigt, wie in Fig. 2 zu sehen ist. Die Befestigung kann mittels Verkleben, Verschweißen, Heißverstemmen o. dgl. der Membran 8 am Träger 12 erfolgen. Der Träger 12 mitsamt der Membran 8 ist dann in einer, in Fig. 1 gezeigten Druckkammer 13 im Gehäuse 2 angeordnet. Ist die Druckkammer 13 in etwa zylindrisch ausgebildet, so handelt es sich in bevorzugter Weise bei dem Träger 12 um einen Trägerring. Zweckmäßigerweise ist dann die Membran 8 an der Peripherie 20 der Isolationsschicht 11 am Träger 12 befestigt.

Wie weiter in Fig. 3 zu sehen ist, kann eine weitere elektrisch leitfähige, elastomere Schicht 14 als Referenz für das Messsignal, das an der Membran 8 anliegt, vorgesehen sein. Die weitere elastomere Schicht 14 ist ebenfalls in der Druckkammer 13 befindlich und im Wesentlichen identisch zur Membran 8 ausgestaltet. Äußere Einflüsse wirken im Wesentlichen in gleichartiger Weise auf die Membran 8 und die weitere elastomere Schicht 14 ein, jedoch ist die Druckeinwirkung durch das Fluid lediglich an der Membran 8 vorhanden. Aufgrund der Referenz durch die weitere elastomere Schicht 14 kann damit das Messsignal im Hinblick auf die äußeren Einflüsse korrigiert werden. Die weitere elastomere Schicht 14 ist an der der Membran 8 gegenüberliegenden Seite des Trägers 12 befestigt. Um eine ungehinderte Zuführung des Fluides gemäß dem Pfeil 16 in die Druckkammer 13 zu gewährleisten, ist eine Öffnung 15 in der weiteren elastomeren Schicht 14 befindlich, die mit dem Anschlussstutzen 3 korrespondiert. Soweit die Membran 8 derart im Gehäuse 2 angeordnet ist, dass die Zuführung des Fluides von der anderen Seite entsprechend dem Pfeil 17 erfolgt, so kann auf die Öffnung 15 in der weiteren elastomeren Schicht 14 verzichtet werden.

Die Erfindung ist nicht auf die beschriebenen und dargestellten Ausführungsbeispiele beschränkt. Sie umfasst vielmehr auch alle fachmännischen Weiterbildungen im Rahmen der durch die Patentansprüche definierten Erfindung. So kann eine solche Messvorrichtung nicht nur in der gesamten Drucksensorik, und zwar bevorzugt im Niedrigdruck-Segment, als Drucksensor, Relativdrucksensor, Differenzdrucksensor o. dgl., sondern auch als ein sonstiger Sensor, wie Füllstandsensor, Wegsensor o. dgl., eingesetzt werden. Des Weiteren kann die Verwendung der Messvorrichtung nicht nur für Hausgeräte sondern auch in sonstigen Anwendungen, beispielsweise in der Labor- sowie in der chemischen Verfahrenstechnik erfolgen.

Bezugszeichen-Liste:

| | |
|---|---|
| 1: | Messvorrichtung / Drucksensor |
| 2: | Gehäuse |
| 3: | Anschlussstutzen |
| 4: | Steckanschluss |
| 5: | Verrastung |
| 6: | Sockel (von Gehäuse) |
| 7: | Deckel (von Gehäuse) |
| 8: | Membran |
| 9: | (erste) leitfähige Schicht |
| 10: | (zweite) leitfähige Schicht |
| 10': | Elektrode |
| 11: | Isolationsschicht |
| 12: | Träger |
| 13: | Druckkammer |
| 14: | (weitere) elastomere Schicht |
| 15: | Öffnung (in elastomerer Schicht) |
| 16,17: | Pfeil (für die Zuführung des Fluides) |
| 18,19: | (elektrischer) Anschluss (von Elektrode) |
| 20: | Peripherie (von Isolationsschicht) |

**Patentansprüche**

1. Druckmessvorrichtung zur Messung des Drucks eines Fluides

   mit einem Gehäuse (2), einer im Gehäuse (2) und/oder am Gehäuse (2) angeordneten elastischen Membran (8), und einem mit der Membran (8) zusammenwirkenden Signalgeber, wobei der Signalgeber derart mit der Membran (8) zusammenwirkt, dass die Einwirkung des Fluides auf die Membran (8) ein zur Messgröße korrespondierendes Messsignal am Signalgeber bewirkt, und wobei die Membran (8) eine elektrisch leitfähige, elastomere Schicht (9) umfasst, die Einwirkung des Fluides auf die Membran (8) eine Änderung der elektrischen Kapazität der Membran (8) bewirkt, und der Signalgeber dadurch von der Membran (8) gebildet ist, dass die Kapazitätsänderung der Membran (8) bei Einwirkung des Fluides als Messsignal vorgesehen ist, **dadurch gekennzeichnet, dass** die Membran (8) eine erste elektrisch leitfähige Schicht (9) und eine zweite elektrisch leitfähige Schicht (10) umfasst,

wobei die beiden leitfähigen Schichten (9, 10) durch eine elektrische Isolationsschicht (11) getrennt sind,

wobei die erste elektrisch leitfähige Schicht (9) sowie die zweite elektrisch leitfähige Schicht (10) als Elektroden (9', 10') auf der elektrischen Isolationsschicht (11) ausgebildet sind,

wobei die Elektroden (9', 10') einander gegenüberliegend auf der jeweiligen Oberfläche der Isolationsschicht (11) angeordnet sind,

und wobei die Elektroden (9', 10') mit der dazwischen befindlichen Isolationsschicht (11) einen elektrischen Kondensator bilden.

2. Druckmessvorrichtung nach Anspruch 1, **dadurch gekennzeichnet, dass** die Elektrode (9', 10') mit einem elektrischen Anschluss (18, 19) elektrisch verbunden ist.

3. Druckmessvorrichtung nach dem vorhergehenden Anspruch, wobei der elektrische Anschluss (18, 19) aus einer auf die Oberfläche der Isolationsschicht (11) aufgebrachten elektrisch leitfähigen Schicht besteht.

4. Druckmessvorrichtung nach einem der beiden vorhergehenden Ansprüche, wobei der elektrische Anschluss (18, 19) von der Peripherie (20) der Isolationsschicht (11) zur Elektrode (9', 10') führend angeordnet ist.

5. Druckmessvorrichtung nach einem der Ansprüche 1 bis 4, **dadurch gekennzeichnet, dass** die Isolationsschicht (11) im Wesentlichen kreisförmig ausgestaltet ist.

6. Druckmessvorrichtung nach dem vorhergehenden Anspruch, wobei die Elektrode (9', 10') im Wesentlichen kreisförmig mit einem bezüglich der Isolationsschicht (11) kleineren Durchmesser ausgestaltet ist.

7. Druckmessvorrichtung nach einem der beiden vorhergehenden Ansprüche, wobei die Elektrode (9', 10') im Wesentlichen konzentrisch bezüglich der Peripherie (20) der Isolationsschicht (11) angeordnet ist.

8. Druckmessvorrichtung nach einem der Ansprüche 1 bis 7, **dadurch gekennzeichnet, dass** die Isolationsschicht (11) aus einem Elastomer besteht.

9. Druckmessvorrichtung nach dem vorhergehenden Anspruch, wobei es sich bei dem Elastomer um Silikon, insbesondere um eine Silikonfolie, handelt.

10. Druckmessvorrichtung nach einem der beiden vorhergehenden Ansprüche, wobei die Isolationsschicht (11) eine Dicke im Bereich von in 0,05 bis 0,2 mm, insbesondere von 0,1 mm, aufweist.

11. Druckmessvorrichtung nach einem der Ansprüche 1 bis 10, **dadurch gekennzeichnet, dass** die elektrische leitfähige Schicht (9, 10) aus einem mit elektrisch leitfähigen Partikeln versehenen Elastomer besteht.

12. Druckmessvorrichtung nach dem vorhergehenden Anspruch,

wobei das Elastomer aus Silikon besteht,

wobei die elektrisch leitfähigen Partikel insbesondere aus Graphit bestehen,

wobei die elektrisch leitfähige Schicht (9, 10) insbesondere als Elektrode (9', 10') auf die Oberfläche der Isolationsschicht (11) aufgedruckt oder auflaminiert ist,

wobei die Dicke der elektrisch leitfähigen Schicht insbesondere maximal 0,1 mm und weiter insbesondere im Bereich von in 1 nm bis 0,1 mm liegt.

13. Druckmessvorrichtung nach einem der Ansprüche 1 bis 12, **dadurch gekennzeichnet,**

**dass** die Membran (8) an einem Träger (12), insbesondere mittels Verkleben, Verschweißen oder Heißverstemmen, vorgespannt befestigt ist,

**dass** insbesondere die Membran (8) an der Peripherie (20) der Isolationsschicht (11) am Träger (12), insbesondere an einem Trägerring, befestigt ist, und

**dass** weiter insbesondere der Träger (12) in einer Druckkammer (13) im Gehäuse (2) angeordnet ist.

14. Druckmessvorrichtung nach einem der Ansprüche 1 bis 13, **dadurch gekennzeichnet,**

**dass** eine weitere elektrisch leitfähige, elastomere Schicht (14) als Referenz für das Messsignal an der Membran (8), insbesondere in der Drucckammer (13), vorgesehen ist, und

**dass** insbesondere die weitere elastomere Schicht (14) an der der Membran (8) gegenüberliegenden Seite des Trägers (12) befestigt ist.

15. Druckmessvorrichtung nach einem der Ansprüche 1 bis 14, **dadurch gekennzeichnet,**

**dass** am Gehäuse (2) ein Anschlussstutzen (3) für die Zuführung des Fluides in die Druckarmmr (13) angeordnet ist, und

**dass** insbesondere eine Öffnung (15) in der weiteren elastomeren Schicht (14) mit dem Anschlussstutzen (3) korrespondiert.

**Claims**

1. A pressure measuring device for measuring the pressure of a fluid,

   having a housing (2), an elastic membrane (8) arranged within the housing (2) and/or on the housing (2), and a signal transducer cooperating with the membrane (8),
   wherein the signal transducer cooperates with the membrane (8) such that the action of the fluid on the membrane (8) causes a measuring signal corresponding to the measured variable at the signal transducer,
   and wherein the membrane (8) comprises an electrically conductive, elastomeric layer (9), the action of the fluid on the membrane (8) causes a change in the electric capacitance of the membrane (8), and the signal transducer is formed by the membrane (8) by the change in capacitance of the membrane (8) upon action of the fluid being provided as the measuring signal,
   **characterized in that** the membrane (8) comprises a first electrically conductive layer (9) and a second electrically conductive layer (10),
   wherein the two conductive layers (9, 10) are separated by an electrically insulating layer (11),
   wherein the first electrically conductive layer (9) and the second electrically conductive layer (10) are configured as electrodes (9', 10') on the electrically insulating layer (11), wherein the electrodes (9', 10') are arranged opposite to one another on the respective surface of the insulating layer (11),
   and wherein the electrodes (9', 10') form an electric capacitor with the insulating layer (11) located therebetween.

2. The pressure measuring device according to claim 1, **characterized in that** the electrode (9', 10') is electrically connected to an electrical terminal (18, 19).

3. The pressure measuring device according to the preceding claim, wherein the electrical terminal (18, 19) consists of an electrically conductive layer applied onto the surface of the insulating layer (11).

4. The pressure measuring device according to any one of the two preceding claims, wherein the electrical terminal (18, 19) is arranged leading from the periphery (20) of the insulating layer (11) to the electrode (9', 10').

5. The pressure measuring device according to any one of claims 1 to 4, **characterized in that** the insulating layer (11) is designed to be substantially circular.

6. The pressure measuring device according to the preceding claim, wherein the electrode (9', 10') is designed to be substantially circular having a smaller diameter relative to the insulating layer (11).

7. The pressure measuring device according to any one of the two preceding claims, wherein the electrode (9', 10') is arranged substantially concentrically relative to the periphery (20) of the insulating layer (11).

8. The pressure measuring device according to any one of claims 1 to 7, **characterized in that** the insulating layer (11) consists of an elastomer.

9. The pressure measuring device according to the preceding claims, wherein the elastomer is silicone, in particular a silicone film.

10. The pressure measuring device according to any one of the two preceding claims, wherein the insulating layer (11) has a thickness in the range of 0.05 to 0.2 mm, in particular of 0.1 mm.

11. The pressure measuring device according to any one of claims 1 to 10, **characterized in that** the electrically conductive layer (9, 10) consists of an elastomer provided with electrically conductive particles.

12. The pressure measuring device according to the preceding claim,

   wherein the elastomer consists of silicone,
   in particular wherein the electrically conductive particle consists of graphite,
   in particular wherein the electrically conductive layer (9, 10) is printed or laminated on the surface of the insulating layer (11) as an electrode (9', 10'),
   wherein the thickness of the electrically conductive layer is in particular no more than 0.1 mm and more particularly in the range of 1 nm to 0.1 mm.

13. The pressure measuring device according to any one of claims 1 to 12, **characterized in that**

   the membrane (8) is fixed to a support (12) in a biased manner, in particular by means of bonding, welding or staking,
   in particular, the membrane (8) is fixed to the periphery (20) of the insulating layer (11) at the support (12), in particular on a support ring, and

more particularly, the support (12) is arranged in a pressure chamber (13) within the housing (2).

14. The pressure measuring device according to any one of claims 1 to 13, **characterized in that**

a further electrically conductive, elastomeric layer (14) is provided on the membrane (8), in particular in the pressure chamber (13), as a reference for the measuring signal, and
in particular, the further elastomeric layer (14) is fixed to the side of the support (12) opposite the membrane (8).

15. The pressure measuring device according to any one of claims 1 to 14, **characterized in that**

a connecting piece (3) for supplying the fluid into the pressure chamber (13) is arranged on the housing (2), and
in particular, an opening (15) in the further elastomeric layer (14) corresponds to the connecting piece (3).

**Revendications**

1. Dispositif de mesure de pression pour mesurer la pression d'un fluide

avec un boîtier (2), une membrane élastique (8) disposée dans le boîtier (2) et/ou sur le boîtier (2), et un générateur de signal interagissant avec la membrane (8),
dans lequel le générateur de signal interagit avec la membrane (8) de telle manière que l'action du fluide sur la membrane (8) provoque un signal de mesure au niveau du générateur de signal correspondant à la variable mesurée,
et dans lequel la membrane (8) comprend une couche élastomère électriquement conductrice (9), l'action du fluide sur la membrane (8) provoque un changement de la capacité électrique de la membrane (8), et le générateur de signal est formé par la membrane (8) de telle manière que le changement de capacité de la membrane (8) lors de l'action du fluide est fourni sous forme de signal de mesure,
**caractérisé en ce que** la membrane (8) comprend une première couche électriquement conductrice (9) et une seconde couche électriquement conductrice (10),
dans lequel les deux couches conductrices (9, 10) sont séparées par une couche d'isolation électrique (11),
dans lequel la première couche électriquement conductrice (9) et la seconde couche électriquement conductrice (10) sont formées sous forme d'électrodes (9', 10') sur la couche d'isolation électrique (11),
dans lequel les électrodes (9', 10') sont disposées l'une en face de l'autre sur la surface respective de la couche d'isolation (11),
et dans lequel les électrodes (9', 10') forment un condensateur électrique avec la couche d'isolation (11) entre elles.

2. Dispositif de mesure de pression selon la revendication 1, **caractérisé en ce que** l'électrode (9', 10') est reliée électriquement à une connexion électrique (18, 19).

3. Dispositif de mesure de pression selon la revendication précédente, dans lequel la connexion électrique (18, 19) est constituée d'une couche électriquement conductrice appliquée sur la surface de la couche d'isolation (11).

4. Dispositif de mesure de pression selon l'une quelconque des deux revendications précédentes, dans lequel la connexion électrique (18, 19) est disposée de la périphérie (20) de la couche d'isolation (11) à l'électrode (9', 10').

5. Dispositif de mesure de pression selon l'une quelconque des revendications 1 à 4, **caractérisé en ce que** la couche d'isolation (11) est sensiblement circulaire.

6. Dispositif de mesure de pression selon la revendication précédente, dans lequel l'électrode (9', 10') est sensiblement circulaire avec un diamètre plus petit par rapport à la couche d'isolation (11).

7. Dispositif de mesure de pression selon l'une quelconque des deux revendications précédentes, dans lequel l'électrode (9', 10') est disposée sensiblement concentriquement par rapport à la périphérie (20) de la couche d'isolation (11).

8. Dispositif de mesure de pression selon l'une quelconque des revendications 1 à 7, **caractérisé en ce que** la couche d'isolation (11) est constituée d'un élastomère.

9. Dispositif de mesure de pression selon la revendication précédente, dans lequel l'élastomère est du silicone, en particulier un film de silicone.

10. Dispositif de mesure de pression selon l'une quelconque des deux revendications précédentes, dans lequel la couche d'isolation (11) présente une épaisseur comprise entre 0,05 et 0,2 mm, en particulier 0,1 mm.

11. Dispositif de mesure de pression selon l'une quelconque des revendications 1 à 10, **caractérisé en ce que** la couche électriquement conductrice (9, 10) est constituée d'un élastomère pourvu de particules électriquement conductrices.

12. Dispositif de mesure de pression selon la revendication précédente,

dans lequel l'élastomère est en silicone,
dans lequel les particules électriquement conductrices sont constituées notamment de graphite,
dans lequel la couche électriquement conductrice (9, 10) est imprimée ou laminée sur la surface de la couche d'isolation (11), en particulier en tant qu'électrode (9', 10'),
dans lequel l'épaisseur de la couche électriquement conductrice est notamment d'un maximum de 0,1 mm et en outre notamment comprise entre 1 nm et 0,1 mm.

13. Dispositif de mesure de pression selon l'une quelconque des revendications 1 à 12, **caractérisé en ce que**

la membrane (8) est précontrainte et fixée sur un support (12), notamment par collage, soudage ou marquage à chaud,
notamment la membrane (8) est fixée à la périphérie (20) de la couche d'isolation (11) sur le support (12), notamment sur un anneau de support, et
de plus, en particulier, le support (12) est disposé dans une chambre de pression (13) dans le boîtier (2).

14. Dispositif de mesure de pression selon l'une quelconque des revendications 1 à 13, **caractérisé en ce**

**qu'**une autre couche élastomère électriquement conductrice (14) est prévue comme référence pour le signal de mesure sur la membrane (8), en particulier dans la chambre de pression (13), et
**que** notamment l'autre couche élastomère (14) est fixée sur le côté du support (12) opposé à la membrane (8).

15. Dispositif de mesure de pression selon l'une quelconque des revendications 1 à 14, **caractérisé en ce**

**qu'**une pièce de raccordement (3) pour amener le fluide dans la chambre de pression (13) est disposée sur le boîtier (2), et
**qu'**en particulier une ouverture (15) dans l'autre couche élastomère (14) correspond à la pièce de raccordement (3).

Fig. 1

Fig. 2

Fig. 3

Fig. 4

Fig. 5

Fig. 6

**IN DER BESCHREIBUNG AUFGEFÜHRTE DOKUMENTE**

**In der Beschreibung aufgeführte Patentdokumente**

- WO 0142776 A1
- EP 2876421 A1
- DE 102009051176 A1
- DE 102005008959 A1